# EUROPEAN PATENT APPLICATION

(11) **EP 2 085 242 A2**
(43) Date of publication of application: **05.08.2009**
(21) Application number: 09151528.8
(22) Date of filing: 28.01.2009
(51) Int. Cl.: B41M 3/00, B41M 5/00, B41M 7/00, G09F 3/10

(54) **Method for production of a crystal-clear and/or transparent film for the purpose of applying an image thereto, and method to render the film self-adhesive**

(30) Priority: 29.01.2008 NL 2001229
(71) Applicant: Grafityp Selfadhesive Products N.V., 3530 Houthalen (BE)
(72) Inventor: Bosman Sr., Herman Rudolph, 3530 Houthalen (BE); Bosman Jr., Herman Rudolph, 3500 Hasselt (BE)
(74) Representative: Ketelaars, Maarten F.J.M.

(57) **Abstract**

The present invention relates to a method for producing a crystal-clear or transparent film, provided with or which can be provided with at least an image and also provided with an adhesive layer in order to render the entire assembly self-adhesive, said method comprising the provision of a carrier which is provided on one side with a crystal-clear or transparent film, the direct application of said image on the crystal-clear or transparent film, the provision of an adhesive layer on the crystal-clear or transparent film, the removal of the crystal-clear or transparent film from the carrier. The invention also relates to an assembly produced in accordance with said method, comprising a crystal-clear or transparent film, provided on one side with at least an image, applied directly to the film and wherein an adhesive layer is provided on the same side in order to render the entire assembly self-adhesive.

## Description

The present invention relates to a method for producing a crystal-clear or transparent film, provided with or which can be provided with at least an image and also be provided with an adhesive layer to make the entire assembly self-adhesive. The invention also relates to a crystal-clear or transparent self-adhesive film which is provided or can be provided on one side with at least an image.

Methods for producing self-adhesive carriers or stickers, which can be provided with one or more images by means of a printing unit (printer) are considered known in the prior art. According to these known methods, a white carrier, such as a sheet of paper, is provided on one side thereof with an adhesive layer, while the other side is provided with a printing layer. An image is formed on or in this printable layer with an inkjet printer. The self-adhesive carrier thus obtained can then be applied to a substrate or surface, i.e. the carrier can adhere thereto.

These well-known image carriers have the disadvantage that, after adhering to the surface, the special print layer with the image is applied on the outer surface of the carrier, and therefore directly exposed to the environment. This makes the carrier, in particular the image, susceptible to damage and other external influences, such as scratches, dust, dirt and UV radiation. It is for this reason that, in the known method, the special printing layer is laminated after applying the image with an adhesive crystal-clear or transparent film in order for it to be protected. This layer not only ensures physical protection of the image, but is usually also provided with UV-absorbers or stabilizers to prevent the fading of colors of the image.

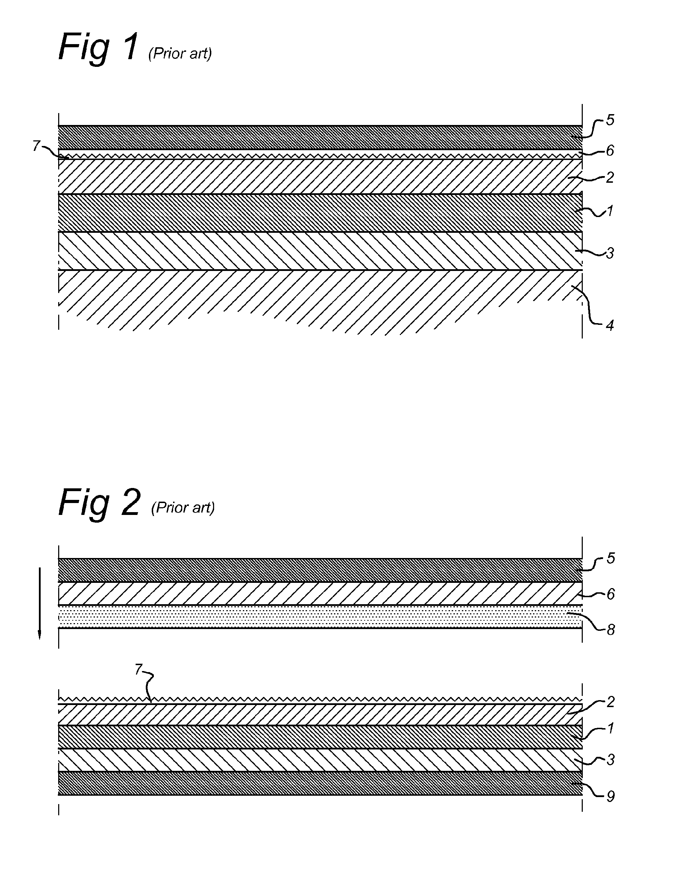

The known carriers thus obtained are shown schematically and in cross-section in Figures 1 and 2. Figure 1 shows a schematic cross-section of a carrier which is applied to a substrate, whereas Figure 2 shows a schematic cross-section of the manufacturing process of an underlying carrier. The figures show a carrier 1, a possible printing layer 2 with an image 7, an adhesive layer 3 and a substrate 4, onto which the carrier can be applied. To protect the printing layer 2 and the image 7 provided thereon or therein, a laminate layer 5 is applied with the aid of an adhesive layer 6.

When the known carriers are manufactured, an assembly comprising two parts may be used, as is shown in Figure 2. The first part comprises a carrier 1, a printing layer 2 and an adhesive layer 3, as well as a first silicone paper layer or film 9; the second part comprises a laminate layer 5, the adhesive layer 6 and a second silicone paper layer 8. After the image is applied in the printing layer 2, the second silicone paper 8 is removed and the laminate layer 5 is applied to the printing layer 2 by means of the adhesive layer 6. This makes the known carrier ready for use, i.e. that the first silicone paper layer 9 can be removed and the entire assembly can be applied to the substrate 4 in order to achieve the situation shown in Figure 1.

The known method has the disadvantage that it is relatively laborious and that a relatively large amount of material is consumed (including the laminate layer 5, the adhesive layer 6 and the second silicone paper layer 8), thus making the costs of production relatively high.

An improved method has been developed in order to overcome this disadvantage, for example, as is disclosed in the Dutch patent NL 1 010 888. According to this known method, the carrier is first provided on one side with a special printing layer, into or onto which an image is applied, and an adhesive layer is then applied to the printing layer to which an image is applied. When the entire assembly is applied according to this known method, the printing layer with the image is therefore positioned between the adhesive layer and the carrier. The carrier itself forms the outer surface of the entire assembly, thus serving as a means of protection for the image in or on the printing layer. Since the carrier itself protects the image, the aforementioned protective laminate layer is not required.

This not only saves material, i.e. the adhesive layer 6, laminate layer 5 and second silicone paper layer 8, as shown in Figure 2, but also eliminates a step in the production process. However, there are also a number of disadvantages to the aforementioned known method, as disclosed in the Dutch patent NL 1 010 888 referred to here.

First of all, the method comprises providing a crystal-clear or transparent carrier with a special printable layer, for example, a layer designed for water-borne inks. Only after this printable layer (in the aforementioned patent also called a printing layer) is applied can the printing of both the printing carrier and printing layer commence. Two separate layers, namely the crystal-clear or transparent carrier and printing layer, are required in order to apply the images. If one chooses to apply a coating directly to a carrier, one is obliged to select a carrier which provides sufficient stiffness to support this carrier as it passes through the coating line. Moreover, this carrier also needs to be sufficiently resistant to the higher temperatures required to enable the drying of the coating layer. The carrier that has such properties, such as a PET film, is unsuitable for use on highly curved and/or uneven surfaces (such as on a vehicle).

EP 1 193 049 A1 discloses a method for producing a multi-layer laminated object that is provided with images. The object comprises a first layer onto which an image is applied during the first step of the manufacturing process. Once the images are applied a layer of PVC is applied with the aid of an adhesive layer. In a last stage of the manufacturing process a flexible or rigid supporting element is attached to the PVC layer with the aid of a further layer of adhesive. This known method also requires the use of a relatively large amount of material.

The object of the present invention is achieve an improved method and improved assembly with a crystal-clear or transparent film provided with an image.

It is also an object of the present invention to provide such a method and such an assembly in which the disadvantages in the prior art are eliminated.

It is also an object of the present invention to provide such a method and such an assembly in which less material is used.

It is also an object of the present invention to provide such a method and such an assembly in which the assembly is also suitable to be applied to uneven and highly curved underlying surfaces.

Finally, it is an object of the present invention to provide such a method and such an assembly whereby the assembly can be quickly and easily removed from an underlying surface.

In order to achieve at least one of the aforementioned objects, according to a first aspect of the present invention a method is provided for a crystal-clear or transparent film to be applied to an underlying surface, the film being provided with at least an image and an adhesive layer, the method comprising:
- providing a first assembly of a crystal-clear or transparent film which is provided on a first side with a removable carrier, wherein the other, second side of the film is suitable for directly applying at least one image thereon;
- providing a second assembly of a removable carrier, which is provided on at least one side with an adhesive layer, wherein the first and second assembly can be joined together by bringing the adhesive layer on the second carrier in contact with the second side of the transparent film; and wherein the second removable carrier and adhesive layer are formed in order for the adhesive layer to be transferred from the second carrier, when the second carrier is removed, onto the crystal-clear or transparent film to form a self-adhesive film that can be attached directly to the underlying surface.

Because the image can now be directly applied onto the crystal-clear or transparent film instead of onto a specially provided second layer, for example, a printing layer, as is the case in NL 1010888, the additional process of applying the coating layer is no longer required. Moreover, because the entire assembly of the first and second layers comprises a smaller number of layers, and in a specific embodiment only a single crystal-clear or transparent film, this reduces the risk of the film separating when it is applied to an irregular surface. Finally, such a film, especially when it concerns a single (monolayer) film, is easier to remove than the usual multiple-layer assembly.

Compared with the prior art illustrated in figures 1 and 2, in which a multi-layered structure is shown, there is the advantage, for example, that a single laminate layer and the step of the application thereof is no longer required. The risk of the film separating is also smaller and the film can be more easily removed.

When a self-adhesive film or foil is printed, the ink used in printing the film or foil may penetrate the film or foil, as was usually the case in certain known methods, and there is also the risk that the ink and adhesive interact in such a manner that this reduces the quality of the adhesive layer. In addition, the image may also become 'cloudy' in appearance as a result of the effect of the ink on the adhesive... The risk of such a "cloudy' appearance occurring can now be prevented or reduced by pouring ink directly onto the film and by applying the adhesive layer later. In addition, there are no adverse effects on the adhesive due to solvents in the ink.

Incidentally, the term "transparent" used herein is intended to denote "at least partially transparent" and the term "crystal-clear" is intended to denote 'essentially fully transparent'.

Furthermore, after joining the first and second assembly, the image on the crystal-clear or transparent film is protected due to the fact that the side of the crystal-clear or transparent film onto which the image is applied, is provided with the second assembly with the self-adhesive side on the image. In its protected state, the entire assembly of the first and second assembly can then be transported. After transportation, one or more of the removable carriers can be removed again.

As the combined crystal-clear or transparent film and the second carrier provided with the adhesive layer are separated, the adhesive layer is transferred from the second carrier to the crystal-clear or transparent film. This makes the crystal-clear or transparent film self-adhesive so that it can be easily applied to an underlying surface. The image is now contained between the transparent film of assembly 1 and the adhesive layer of assembly 2.

In addition, the method preferably comprises the creation of an image on the crystal-clear or transparent film by printing directly on the surface thereof.

What this means is that ink is applied in or onto the crystal-clear or transparent film without the need for the crystal-clear or transparent film to be provided with a separate printing layer or undergo any other pre-treatment or process, as is usually the case in the known methods (as disclosed in NL-1010888). In a particularly advantageous embodiment, the method comprises guiding the film applied to the first carrier through a printing unit, specifically an inkjet printer, in order to apply the ink directly on or in the crystal-clear or transparent film.

Because the crystal-clear or transparent foil or film is delivered on a carrier, in particular - but not limited to - a paper carrier, it is technically possible for the film to be fed automatically through such a printing unit so that the speed with which the image is applied is greatly increased.

In the case of the known method, as disclosed in NL 1 010 888, the film is fed through the inkjet printers. As previously mentioned, a disadvantage of the known method was that the film itself should have sufficient properties to also serve as a carrier. This restricted the options in relation to the choice of material of the film.

In the known method described above, inks are used which are water-borne. The water is used as a means of transporting the pigment. After printing, the water needs to evaporate, which means that this kind of print requires a specific drying time. According to one embodiment of the invention inks based on solvents (solvents) are used. Advantages of this type of ink in relation to the water-based inks is that they dry much faster and do not need any special additional coating, and are colourfast and weatherproof. Solvents can also be used that react to form a chemical compound with the film, thus increasing the durability of the image.

According to a further preferred embodiment, the method comprises first allowing the ink applied to the crystal-clear or transparent film to dry, followed by the joining of the first and second carriers after drying. This has the advantage that the ink has no effect at all on an adhesive layer if this is applied later.

Especially if larger quantities of solvent inks are used, this may affect the adhesive layer as a result of the interaction between the ink and adhesive. "Cloudiness' may occur if such an interaction between solvent inks and an adhesive layer occurs. If the first ink and the adhesive layer can be allowed to dry first, before coming into contact with the adhesive layer or layer of glue, no substantial effect will occur.

The second assembly which serves to protect the image on the crystal-clear or transparent film during storage and transport of the entire assembly, is preferably formed by backing paper which is siliconised on at least one side and more preferably on two sides.

The second carrier can be formed substantially from a material which, on the one hand is suitable to hold the adhesive of the adhesive layer but which, on the other hand, binds the adhesive in such a (weak) manner that the adhesive can be transferred from the second carrier to the crystal-clear or transparent film. In other embodiments the carrier may be formed only in part from this material, instead of using the aforementioned material to form the entire carrier. For example, the carrier may be provided on one or two sides with a coating which has such material properties and whereby the rest of the carrier may be formed from a different material.

In this case, the properties of the coating rather than those of the carrier itself ensure that the adhesive layer does not remain too firmly attached. An example of such a coating layer is a layer of silicone. This is why, in a particular preferred embodiment, silicone paper is used, preferably siliconised paper provided on both sides with a layer of silicone. This ensures that the paper with a silicone adhesive - prior to its use in the method according to the invention - can be rolled up without the adhesive layer sticking to the back of the silicone paper.

Any suitable adhesive can be used for the adhesive layer, as long as it can be attached to the crystal-clear clear or transparent film, with the applied image. Preferably, the adhesive layer is only slightly transparent or practically non-transparent and even more preferably, the adhesive layer is essentially white, so that the adhesive layer forms a uniform background for the image, which is particularly advantageous if the film is to be applied to a surface which has a variable appearance. The adhesive layer is coloured white because most printers are not capable of printing a white colour.

The film can be made from an extensible material, so that it is easier to attach to an irregular surface. The extensibility is preferably between 50% and 250%, more specifically between 100% and 200%. The film is also preferably UV-resistant in order for the applied image to be protected from the effects of the sun.

According to a preferred embodiment, the crystal-clear or transparent film is formed from a single layer, so that it is easier to remove than existing film, which is usually multilayered (i.e. a film layer and a laminate layer), after being applied to a surface. Moreover, the risk of the film separating is greatly reduced, especially on surfaces that are difficult to adhere to, which makes the film easier to manipulate.

The film is preferably made from a synthetic material, preferably a polyvinyl chloride (PVC). Other synthetic materials are also conceivable, such as polypropylene (poly propylene) (PP), etc. The synthetic material is preferably more or less elastic (with an elasticity between 50% and 250% and more preferably between 100 % and 200%).

According to one embodiment of the invention the provision of the first carrier with crystal-clear or transparent film comprises the application on the first carrier of liquid plastic (film) material, in particular the pouring of the material on the first carrier and allowing the material to harden on the first carrier. In this way, a very thinly poured film can be formed, without the need for a separate adhesion, for example in the form of an adhesive layer between film and carrier.

According to another aspect of the invention a crystal-clear or transparent film is provided which is or can be provided on one side with at least one image is (to be) applied directly to the film and whereby an adhesive layer with a removable carrier is also provided on the same side, whereby the film, removable carrier and adhesive layer are formed in such a manner that the adhesive layer can be transferred from the removable carrier to the crystal-clear or transparent film when separated in order to provide a self-adhesive film. According to one embodiment, the film comprises a removable carrier on the side opposite to the image to be applied and the aforementioned second removable carrier on the side on which the image is to be applied. In this way, the film is protected on both sides and can be (further) transported with little risk of damage. Furthermore, the crystal-clear or transparent film is preferably formed directly on the first carrier without an adhesive layer, for example by pouring film material onto the carrier and allowing the material to harden.

Further advantages, characteristics and details of the present invention will be explained by the following description of preferred embodiments. In the following description, reference is made to the following figures in which:
Figure 1 is a schematic cross section of a carrier provided with a printing layer with image according to the prior art, wherein the carrier is applied to an underlying surface;
Figure 2 is a schematic cross-section of the carrier of Figure 1, during the production thereof;
Figure 3 is a schematic cross-section of an embodiment of the assembly according to this invention, wherein the first carrier is not yet removed;
Figure 4 is a schematic cross-section of the embodiment of Figure 3, with removable first carrier;
Figure 5 is a schematic cross-section of the shape of Figure 4, with removable second carrier;
Figure 6 is a schematic cross-section of the embodiment of Figure 5 applied to an underlying surface, and
Figures 7 and 8 both show a view of a first roll with a first portion of an assembly and a second roll with a second portion of the assembly.

Examples of known methods for producing a carrier provided with an image, as well as of the carrier itself, are already described above with reference to Figures 1 and 2.

According to certain embodiments of the invention a system is provided comprising two parts. Part one is a crystal-clear or transparent foil or film. This film and/or foil relates to a film that has been poured onto a carrier or a calendered [hot-pressed] foil that is printable. The printed image is applied as a negative image because the side opposite to the pouring side is the transparent side. The carrier is not yet removed because this is still required for the protection of the image and for the further processing of the entire assembly. Part two comprises a siliconised carrier with a silicone layer on both sides onto which a white or transparent layer of adhesive is applied. This carrier is therefore siliconised on both sides. The double-sided silicon carrier enables the white or transparent adhesive layer to be rolled up. The adhesive layer is preferably white as most print-plotters are not provided with a means to print white. After the drying of part one, the negative image or presentation printed and/or to be printed must be laminated with part two, i.e. with the siliconised carrier provided with a white or transparent adhesive layer. This white adhesive layer provides the transparent or crystal-clear film (part 1) with a white tint on the printing or images sides. A carrier can be provided with a transparent adhesive layer for printers that are capable of printing the colour white.

Part two, as is the case with part one, may serve two purposes, namely as a carrier for the printed layer and/or printing layer, and as a protective layer for the printed image. After joining together, the carrier of part one can then be detached. Part two preferably remains in place until the film with the image is applied to an underlying surface, thus achieving a saving on the amount of material, work and time required.

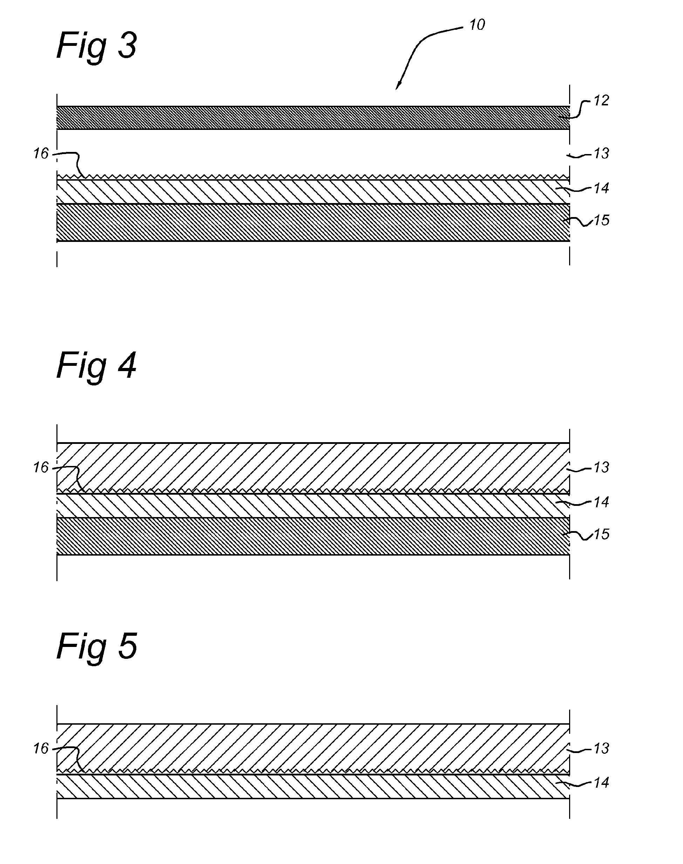

Figure 3 shows a further preferred embodiment of a system 10 according to the present invention. The system 10 comprises a first assembly comprising a first carrier 12, which is usually formed from backing paper, onto which at least a partially crystal-clear and/or transparent film 13 is applied. The adhesion between carrier 12 and the transparent film is achieved by the fact that the transparent film (preferably PVC) is poured onto the carrier in liquid form and allowed to dry. The adhesive layer is therefore strong enough for the subsequent processing to be carried out. As the liquid film material (e.g. a PVC paste) dries, volatile substances are released from the material which results in a certain degree of micro-porosity. This micro-porosity ensures improved adhesion of the ink to the crystal-clear or transparent film 13. This generally results in the improved printability of the film. The drying of the film material can be achieved by heating the entire carrier assembly to which the liquid film material is applied, for example, in a curing oven.

Any particular known crystal-clear or transparent film may be applied, all of which lie within reach of those skilled in the art.
However, in the examples disclosed herein, the film is made from material with a characteristic thickness of between 60-70 micrometers, although other thicknesses are also conceivable.

The film 13 is provided with an imprint or an image 16 on the side opposite the side attached to the first carrier 12. The image is usually applied to the film 13 as a negative image, as seen from the side onto which the image is applied so that the image is visible as positive when viewed through the film 13, after the film is attached to an underlying surface. The conversion and printing of the image in negative is easily achieved with known computer software used for editing and/or processing any of these images.

The image is formed by guiding the entire assembly of carrier 12 and film 13 through an inkjet printer. Although the invention is not limited to certain types of ink or any number of colours or the application of only a single black ink or a single coloured ink, the invention is particularly well suited for producing colour images, such as photos prints and such. As a rule, the basic colours used are yellow, magenta and cyan, possibly in combination with black ink. The application of a larger number of colours is also conceivable.

As is known by those skilled in the art, the images composed by such inkjet printers consist of a large number of small points or 'dots' rendered in the basic colours, each individual colour being sprayed, generally in quick succession, from printing heads in the printer onto the film 13, for example, with a density of 1320 or 720 'dots per inch' (dpi). All of these dots define thereby not only the shape of the image but also form the colours of the image by using a combination or combinations of the four or more basic colours. In this way, any conceivable colour or combination of colours can be obtained, as well as a high degree of resolution in the image. This makes the inkjet printer ideal for printing photos and such, which can be read and stored on a computer, after which the computer can be used for controlling the printer. This makes the inkjet printer highly suitable for creating individual images or for producing small quantities of images.

Once the image is applied to the appropriate side of the film 13, the ink is first allowed to dry. Once the ink is sufficiently dry, an adhesive layer (usually by means of a laminator) is provided on the side on which the image 16 is applied.

The choice of suitable adhesives and glues will be apparent to those skilled in the art. The adhesives or glues may, for example, be white or opaque, their composition being such that they can be transferred from one specific backing material, for example siliconised paper, to another carrier such as a crystal-clear or transparent film. Clear or transparent adhesives or glues may also be used and mixed with suitable quantities of white pigments or fillers.

In one particular embodiment, the glue or adhesive layer 14 is applied to the film 13 in the following manner. A layer of adhesive 14 is applied to a second carrier 15, for example, one made from siliconised paper. The second carrier 15 is a carrier which, on the one hand is suitable to hold the adhesive (the said adhesive layer 14) but which, on the other hand, binds the adhesive in such a (weak) manner that the adhesive of the second carrier 15 can be transferred to the film 13 when the second carrier 15 with the applied adhesive layer 14 is pressed against the film 13. In the embodiments shown in Figures 3-6, the second carrier 15 is formed by siliconised paper comprising paper coated on both sides with a layer of silicone.

Figure 3 shows the state in which the assembly comprising the second carrier 15 provided with the adhesive layer 14 is applied to the film 13, the film 13 which, in turn, is attached to the second carrier 12. In this state, the system 10 of the first and second assembly comprising the second carrier 15, an adhesive layer 14, film 13 and the first carrier 12 can be stored and transported. In this state, also called the transport state, the film 13 and, in particular, the image 16 applied thereto is protected by the first carrier 12 and second carrier 15.

After the system 10 is stored in its state ready for transport or to be delivered, as shown in Figure 3, the first carrier 12 is removed, in most cases usually just before the film 13 is applied to a surface or substrate 4. The separation of the first carrier 12 and film 13 can be carried out by hand, simply by detaching or removing the carrier from the film 13. The state in which the first carrier 12 is removed, is shown in figure 4.

Subsequently, the second carrier 15 is removed, also by removing it by hand. When the second carrier 15 is removed, the adhesive layer 14 originally attached thereto, which is also pressed against the foil 13 in its transport state, is transferred from the second carrier 15 to the film 13. This means that when the second carrier 15 is removed, the adhesive layer 14 remains in place on the image. The state in which both the first and second carrier are removed from the film is shown in Figure 5.

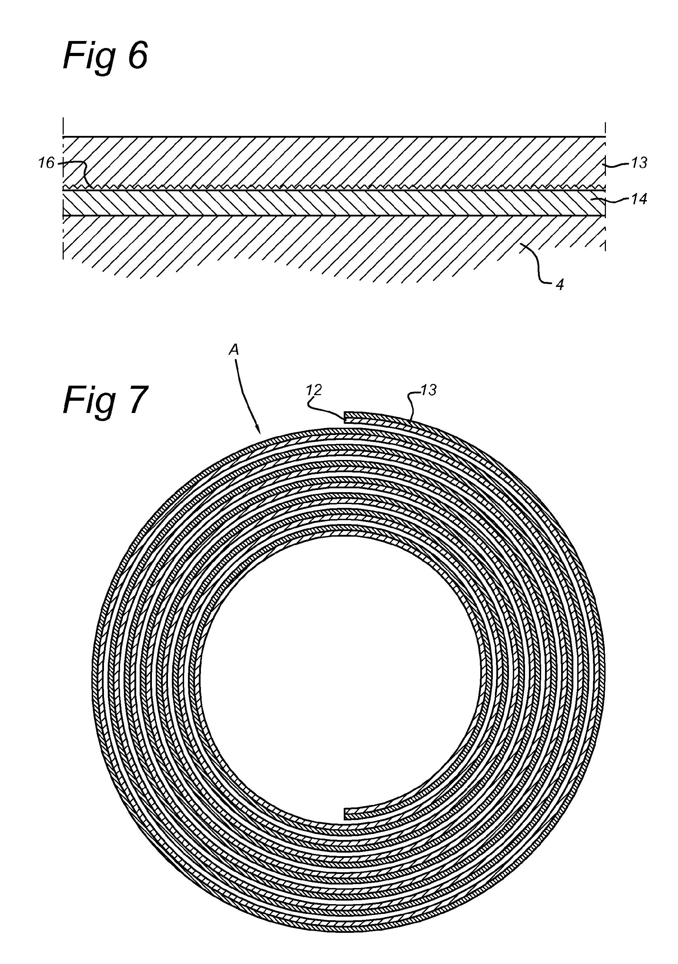

Finally, the film 13, which is provided on the inside with an image 16, as well as an adhesive layer 14, can be attached to the underlying surface 4 by pressing the film 13 with adhesive layer firmly against the surface, as is shown in Figure 6.

Although in many cases this is not preferred, instead of first removing the first carrier 12 and then the second carrier 15 from the film 13, the second carrier 15 may also be removed first. After removal of the second carrier, the whole of the film 13, provided with an image 16 and the bonding or adhesive layer 14 is applied to the surface, as well as the first carrier 12 attached to the film. Only when the film has adhered to the underlying surface is the first carrier 12 removed, for example by separating this from the film. However, the disadvantage of this sequence of procedures is that when the film is attached to the underlying surface, the surface to which the film is to be applied is not visible or is at least barely visible.

The method of the invention and the adhesive film thus obtained, may for example, be used for all known applications of inkjet technologies, such as producing self-adhesive transparencies of photographs, drawings, graphic designs and the like, for example for use as a decoration, logo, lettering and/or for advertising purposes. The surface to which the films can be attached may vary from vehicles, such as company vehicles, racing cars, boats, walls, floors, windows, banners, panels and the like.

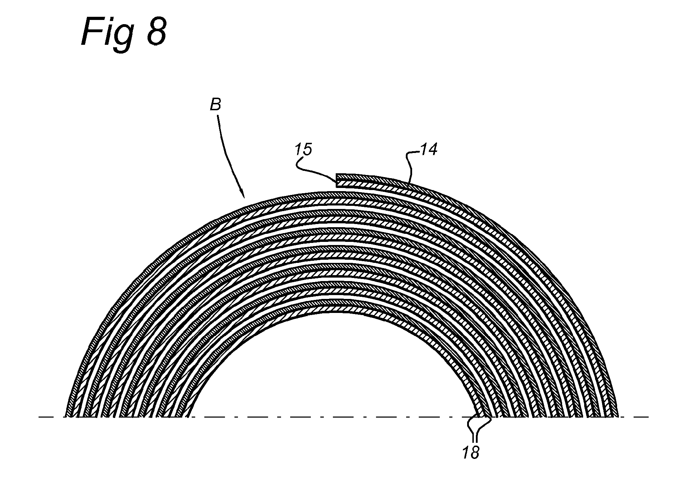

Figures 7 and 8 show examples of how, in practice, the system of the first and second assembly can be delivered to a user.
Figure 7 shows a roll (A) comprising the first assembly, for example, a rolled-up strip of the first backing material (12) to which a film (13) is attached.
Figure 8 shows a roll (B) comprising the second assembly, for example, a rolled-up strip of the second backing material (15), which is provided on both sides with of a layer of silicone (18) and is provided on one side with a (preferably white) adhesive layer (14). Upon receipt of both rolls, the user will apply one or more images to the inside of the film (13), after which the first and second assembly can be joined together. This then enables the system of joined assemblies to be transported. After removal of the second carrier, the film is made self-adhesive in that position and can be attached to an underlying surface.

The present invention is not limited to the preferred embodiments thereof disclosed herein. The requested rights are determined by the following claims within the scope of which numerous modifications are conceivable.

## Claims

1. Method for producing a crystal-clear or transparent film to be applied to an underlying surface, the film being provided with or to be provided with at least an image, and an adhesive layer, said method comprising:
- providing a first assembly of a crystal-clear or transparent film (13) which is provided on a first side with a removable carrier (12), wherein the other, second side of the film (13) is suitable for directly applying at least one image (16) thereon;
- providing a second assembly of a second removable carrier (15), which is provided on at least one side with an adhesive layer (14), wherein the first and second assembly can be joined together by bringing the adhesive layer (14) on the second carrier (15) in contact with the second side of the transparent film (13), and
wherein the film (13), second removable carrier (15) and adhesive layer (14) are formed in order for the adhesive layer (14), when removed from the second carrier (15), to be transferred from the second carrier (15) to the crystal-clear or transparent film (13) to form a self-adhesive film that can be applied directly to the underlying surface.

2. Method according to claim 1, comprising the joining of the first and second assembly so that the adhesive layer (14) on the second carrier (15) comes in contact with the second printed side or side to be printed of the transparent film (13).

3. Method according to claim 1 or 2, comprising the transfer of a first roll of the first assembly, comprising a crystal-clear or transparent film, a carrier and possibly an image, the transport of a second roll of the second assembly, comprising a carrier and an adhesive layer and subsequently, the joining together of the first and second assembly in such a manner that the adhesive layer (14) on the second carrier (15) comes in contact with the second printed side of the transparent film (13).

4. Method according to any of the preceding claims, comprising the direct application to the film (13) of one or more images (16) and subsequently, the joining of the first and second assembly.

5. Method according to claim 4, comprising the direct application of ink onto the crystal-clear glass or transparent film (13), preferably in a number of colours.

6. Method according to claim 4 or 5, comprising the guidance of the carrier (12) with the crystal-clear or transparent film (13) through a printing unit, in particular an ink jet printer, for the direct application of ink onto or in the crystal-clear or transparent film.

7. Method according to any of the preceding claims, wherein the provision of the first carrier (12) with crystal-clear or transparent film (13) comprises applying on the first carrier of a liquid synthetic material, in particular, the pouring of the synthetic material onto the first carrier, and the hardening thereof on the first carrier (12).

8. Method according to any of the preceding claims, comprising:
- the separation of the combined crystal-clear or transparent film (13) and the second removable carrier (15) provided with the adhesive layer (14), and, at the same time, transferring the adhesive layer (14) of the second carrier (15) onto the crystal-clear or transparent film (13), and
- the separation from the crystal-clear or transparent film (13) of the first removable carrier (12).

9. Method according to any of the preceding claims, wherein the second carrier (15) is formed by siliconised paper on at least one side, preferably on two sides.

10. Crystal-clear or transparent film (13) provided or which can be provided on one side with at least one image (16) applied directly to the film and wherein an adhesive layer (14) with a removable carrier (15) is provided, wherein the assembly of the film (13), the removable carrier (15) and adhesive layer (14), removable carrier (15) and bonding layer (14) are formed in order to be transferred from the removable carrier (15) to the crystal-clear or transparent film (13) when separated therefrom, so that the film becomes self-adhesive.

11. Assembly according to claim 10, wherein the removable carrier (15) is formed by siliconised paper on at least one side, preferably on two sides.

12. Assembly according to claim 10 or 11, formed as a single layer, preferably as a single layer of PVC film.

13. Assembly according to any of the claims 10-12, wherein the film on the side opposite to where the image is to be applied is provided with a first removable carrier (12) and is provided on the side on which the image is to be applied with said second removable carrier (15).

14. Assembly (10) according to any of the claims 10-13, with no adhesive layer applied directly on the first carrier, formed by pouring synthetic material onto the carrier and by allowing said material to dry.

15. Assembly according to any of the claims 10-14, wherein the film is formed from extensible material, wherein the extensibility of the material is between 50% and 250%, preferably between 100% and 200%.

16. Assembly comprising a first roll (A) formed from a first assembly comprising at least the film (13) according to any of the claims 10-16 and the first carrier (12), and a second roll (B) formed from a second assembly, comprising at least a second carrier (15) and an adhesive layer (14) provided thereon, wherein the second carrier (15) is siliconised on both sides.
